# EUROPEAN PATENT APPLICATION

(11) **EP 3 785 815 A1**
(43) Date of publication of application: **03.03.2021**
(21) Application number: 19867536.5
(22) Date of filing: 04.09.2019
(51) Int. Cl.: B08B 17/06

(54) **ANTI-FINGERPRINT TERMINAL HOUSING AND TERMINAL**

(30) Priority: 25.09.2018 CN 201811113662; 01.12.2018 CN 201811460545
(71) Applicant: HUAWEI TECHNOLOGIES CO., LTD., Shenzhen, Guangdong 518129 (CN)
(72) Inventor: YANG, Hongsheng, Shenzhen, Guangdong 518129 (CN); HU, Banghong, Shenzhen, Guangdong 518129 (CN); LI, Yungang, Shenzhen, Guangdong 518129 (CN); PAN, Lulu, Shenzhen, Guangdong 518129 (CN); MA, Rong, Shenzhen, Guangdong 518129 (CN); LV, Wangchun, Shenzhen, Guangdong 518129 (CN); SI, Heshuai, Shenzhen, Guangdong 518129 (CN)
(74) Representative: Epping - Hermann - Fischer
(86) International application number: PCT/CN2019/104378
(87) International publication number: WO 2020/063285

(57) **Abstract**

Embodiments of the present invention provides an anti-fingerprint terminal housing including a housing substrate, where the housing substrate includes a first surface and a second surface that are oppositely disposed, the first surface faces the exterior of the terminal, and the second surface faces the interior of the terminal; the first surface is provided with a plurality of spaced convexes or concaves formed by the housing substrate, a distance between boundaries of any two adjacent convexes or concaves on a same side is in a range of 1-900 nm, and the height of the convex or the depth of the concave is in a range of 1-400 nm. The anti-fingerprint terminal housing is provided with a convex or concave structure formed by the housing substrate on the surface of the substrate of the terminal housing, and distribution and sizes of convexes and concaves are designed and controlled, so that the terminal housing has excellent anti-fouling performance and anti-fingerprint performance, high light transmittance, low haze, and high wear resistance. The embodiments of the present invention further provide a terminal including the anti-fingerprint terminal housing.

## Description

This application claims priority to Chinese Patent Application No. 201811113662.4, filed with the China National Intellectual Property Administration on September 25, 2018 and entitled "ANTI-FINGERPRINT TERMINAL HOUSING AND TERMINAL", and claims priority to Chinese Patent Application No. 201811460545.5, filed with the China National Intellectual Property Administration on December 1, 2018 and entitled "ANTI-FINGERPRINT TERMINAL HOUSING AND TERMINAL", which are incorporated herein by reference in their entireties.

### TECHNICAL FIELD

Embodiments of the present invention relate to the field of electronic communications technologies, and in particular, to a housing of a terminal device.

### BACKGROUND

Fingerprints and dirt are the worldwide problems faced by the end product housings such as the front screen cover plate and the rear cover plate of a mobile phone. Because these housing materials (such as glass, plastic, and metal) are hydrophilic and lipophilic, fingerprints and dirt are easily adhered to their surfaces, thereby affecting physical properties such as optical transmissibility and friction coefficient, and affecting user experience.

Therefore, it is important to resolve the problems of fingerprint and dirt on the surface of the housing.

### SUMMARY

In view of this, an embodiment of the present invention provides an anti-fingerprint terminal housing, where a convex or concave structure formed by a housing substrate is formed by etching the surface of the substrate of the terminal housing, and by designing and controlling the distribution and sizes of convexes or concaves, a housing having excellent anti-fouling performance and anti-fingerprint performance, high light transmittance, low haze, and high wear resistance is obtained, so as to resolve the problems of poor anti-fouling and poor anti-fingerprint performance of a conventional terminal product housing.

Specifically, according to a first aspect, an embodiment of the present invention provides an anti-fingerprint terminal housing including a housing substrate, where the housing substrate includes a first surface and a second surface that are oppositely disposed, the first surface faces the exterior of the terminal, and the second surface faces the interior of the terminal, the first surface is provided with a plurality of spaced convexes or concaves formed by the housing substrate, the distance between the boundaries of any two adjacent convexes or concaves on the same side is in the range of 1-900 nm, the height of the convex is in the range of 1-400 nm, and the depth of the concave is in the range of 1-400 nm.

Further, the distance between the boundaries of any two adjacent convexes or concaves on the same side is in the range of 1-400 nm. Still further, the distance between the boundaries of any two adjacent convexes or concaves on the same side is in the range of 100-300 nm.

Further, the distance between the boundaries of any two adjacent convexes or concaves on the same side is in the range greater than 400 nm and less than or equal to 900 nm.

Further, the height of the convex is in the range of 50-200 nm, and the depth of the concave is in the range of 50-200 nm.

The area proportion of the plurality of convexes or the area proportion of the areas other than the plurality of concaves on the first surface is less than or equal to 2/3.

Further, the area proportion of the plurality of convexes or the area proportion of the areas other than the plurality of concaves on the first surface is less than or equal to 1/2.

Still further, the area proportion of the plurality of convexes or the area proportion of the areas other than the plurality of concaves on the first surface is greater than or equal to 1/10 and less than or equal to 1/2.

To achieve a better anti-fingerprint effect, in this embodiment of the present invention, the gap between any two adjacent convexes is greater than 1/2 of the distance between the boundaries. The gap between any two adjacent concaves is less than or equal to 1/2 of the distance between the boundaries.

Optionally, the first surface is further provided with an anti-fingerprint coating, the anti-fingerprint coating completely covers the first surface and completely covers the surfaces of the plurality of convexes or concaves, the material of the anti-fingerprint coating includes at least one of fluorosilane, alkylsiloxane, or tetrafluoropolyether.

The visible light transmittance of the anti-fingerprint terminal housing is greater than 80%. The anti-fingerprint terminal housing has a haze of less than 5%, and a water contact angle of the first surface is greater than or equal to 110°.

The material of the housing substrate is glass, plastic or metal. The terminal housing may be a planar housing or a curved housing.

According to the anti-fingerprint terminal housing provided in the first aspect in this embodiment of the present invention, the micro-nano-level convex or concave structure on the surface of the anti-fingerprint terminal housing is formed by the housing substrate and has a specific size design, so that the surface of the terminal housing has high mechanical strength and excellent wear resistance performance while featuring excellent anti-fouling performance and anti-fingerprint performance, low friction coefficient, high light transmittance, and low haze, thereby greatly improving user experience.

According to a second aspect, an embodiment of the present invention further provides a terminal, where the terminal includes a housing, and a display module and an electronic component module that are housed in the housing, the display module is electrically connected to the electronic component module, and the housing includes the anti-fingerprint terminal housing according to the first aspect of the present invention.

### BRIEF DESCRIPTION OF DRAWINGS

FIG. 1 is a schematic structural diagram of an anti-fingerprint terminal housing according to an embodiment of the present invention;
FIG. 2 is a schematic diagram of droplet infiltration on a surface of an anti-fingerprint terminal housing according to an embodiment of the present invention;
FIG. 3 is a schematic diagram of a process for preparing an anti-fingerprint terminal housing in an implementation according to an embodiment of the present invention;
FIG. 4 is a schematic diagram of a process for preparing an anti-fingerprint terminal housing in another implementation according to an embodiment of the present invention;
FIG. 5 is a schematic diagram of a process for preparing an anti-fingerprint terminal housing in another implementation according to an embodiment of the present invention;
FIG. 6 is a schematic structural diagram of a terminal according to an embodiment of the present invention;
FIG. 7 is a schematic diagram of an arrangement of a concave structure on a surface of a terminal housing according to Embodiment 1 of the present invention;
FIG. 8 is a schematic diagram of an arrangement of a hole array on a surface of a terminal housing according to Embodiment 4 of the present invention; and
FIG. 9 is a schematic diagram of an arrangement of a convex structure on a surface of a terminal housing according to Embodiment 6 of the present invention.

### DESCRIPTION OF EMBODIMENTS

The following describes the embodiments of the present invention with reference to the accompanying drawings in the embodiments of the present invention.

Currently, glass is widely used in electronic communications products such as mobile phones, for example, used as a front cover plate or a rear cover plate of a mobile phone. However, these products cannot avoid generation of fingerprints and dirt during use, thereby affecting user experience. To resolve the problems of fingerprints and dirt residues, it is common in the industry to provide an anti-fingerprint coating film on a glass surface, but the method cannot fundamentally resolve the problems of fingerprints and dirt residues.

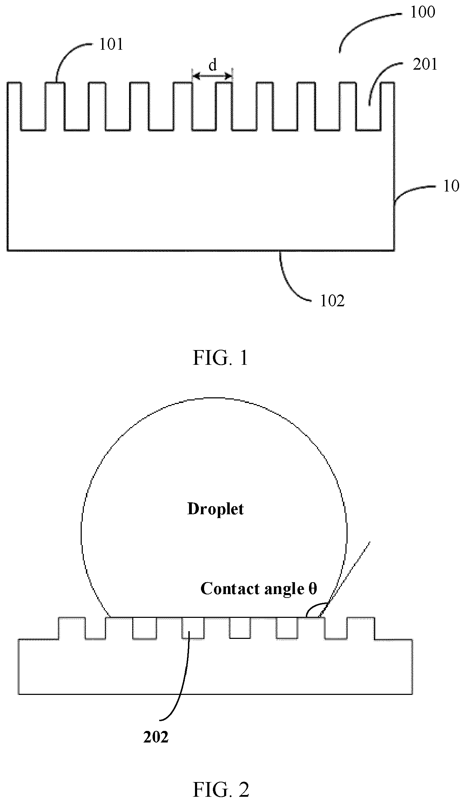

To fundamentally resolve the problems of fingerprints and dirt residues on a conventional housing surface that is made of glass or the like, and to obtain housing surface that is of a micro-nano structure and that has high light transmittance, low haze, and high wear resistance so as to improve user experience, as shown in FIG. 1, an embodiment of the present invention provides an anti-fingerprint terminal housing 100 including a housing substrate 10, where the housing substrate 10 includes a first surface 101 and a second surface 102 that are oppositely disposed, the first surface 101 faces the exterior of the terminal, and the second surface 102 faces the interior of the terminal, the first surface 101 is provided with a plurality of spaced concaves 201 formed by the housing substrate, the distance d between the boundaries of any two adjacent concaves 201 on the same side is in the range of 1-900 nm, and the depth of the concave is in the range of 1-400 nm.

In another implementation of the present invention, the first surface 101 is provided with a plurality of spaced convexes formed by the housing substrate 10, the distance between the boundaries of any two adjacent convexes on the same side is in the range of 1-900 nm, and the height of the convexes is in the range of 1-400 nm.

According to the anti-fingerprint terminal housing provided in this embodiment of the present invention, the presence of a convex or concave structure of a specific size can change the hydrophilicity and lipophilicity of the surface of the housing, so that the housing has excellent anti-fouling and anti-fingerprint effects. In addition, the convex or concave structure is formed by the housing substrate, so that the convex or concave structure has high mechanical strength and excellent wear resistance performance, and can ensure that the surface of the housing still has excellent anti-fouling and anti-fingerprint effects after long-time use. Further, the shape and size of the convex or concave structure can be controlled using an etching process during preparation, to eliminate or reduce scattering, diffraction/interference, and the like caused by light on the convex or concave structure, thereby ensuring that a housing with high light transmittance and low haze is obtained to meet a user's use requirement.

In this implementation of the present invention, the convex or concave structure is a micro mechanism structure that is invisible to naked eyes.

As shown in FIG. 2, in an implementation of the present invention, the surface of the housing is provided with a plurality of convexes, and a large amount of air exists between micro gaps 202 formed by adjacent convexes, so that the droplets can only be infiltrated on the surfaces of the convexes, and cannot expel the air out of the micro gaps 202 and are in contact with the surface of the housing, thereby increasing the contact interface between the droplets and the air. Therefore, the droplets do not automatically expand, but keep their spherical shape so as to be detached from the surface of the housing, thereby achieving excellent anti-fouling and anti-fingerprint effects.

In an implementation of the present invention, optionally, the distance between the boundaries of any two adjacent convexes or concaves on the same side is in the range of 1-400 nm. Further, the distance between the boundaries of any two adjacent convexes or concaves on the same side is in the range of 100-300 nm or 150-350 nm. Still further, the distance between the boundaries of any two adjacent convexes or concaves on the same side is in the range of 150-250 nm.

In another implementation of the present invention, optionally, the distance between the boundaries of any two adjacent convexes or concaves on the same side is in the range greater than 400 nm and less than or equal to 900 nm. Further, the distance between the boundaries of any two adjacent convexes or concaves on the same side is in the range of 500-800 nm.

In this implementation of the present invention, the foregoing distance between the boundaries determines the sizes of the convexes or concaves, thereby directly affecting various properties of the surface of the housing. An appropriate size setting ensures an excellent anti-fingerprint effect and excellent optical effects such as high transmittance and low haze. When the foregoing distance increases, optical properties (such as haze and visible light transmittance) of the housing are relatively reduced. When the foregoing distance decreases, the production process becomes more difficulty.

In this implementation of the present invention, optionally, the height of the convex is in the range of 50-200 nm, and the depth of the concave is in the range of 50-200 nm. In another implementation of the present invention, optionally, the height of the convex is in the range of 100-300 nm, and the depth of the concave is in the range of 100-300 nm. Further, the height of the convex is in the range of 200-300 nm, and the depth of the concave is in the range of 200-300 nm.

In this implementation of the present invention, if the convex is higher and the concave is deeper, the optical properties (such as haze and visible light transmittance) of the housing are better.

In practical application, the shape and size of the convex or concave can be controllably adjusted in the foregoing size range in the embodiments of the present invention based on the requirements of a specific product for properties such as haze and visible light transmittance.

To obtain a housing surface having a larger water contact angle, in this implementation of the present invention, the area proportion of the plurality of convexes or the area proportion of the areas other than the plurality of concaves on the first surface is less than or equal to 2/3. Further, the area proportion of the plurality of convexes or the area proportion of the areas other than the plurality of concaves on the first surface is less than or equal to 1/2. Still further, the area proportion of the plurality of convexes or the area proportion of the areas other than the plurality of concaves on the first surface is greater than or equal to 1/10 and less than or equal to 1/2. The smaller the area of the convex part (that is, the part directly accessible to the user) on the first surface, the anti-fingerprint effect can be improved more significantly, but the mechanical strength of the surface of the housing decreases accordingly. Therefore, the area of the convex part can be specifically set by comprehensively considering the foregoing impact and based on actual needs.

To achieve a better anti-fingerprint effect, in this implementation of the present invention, the gap between any two adjacent convexes is greater than 1/2 of the distance between the boundaries. The gap between any two adjacent concaves is less than or equal to 1/2 of the distance between the boundaries.

In this implementation of the present invention, the arrangement of the convexes or concaves is not limited, and a plurality of convexes or concaves can be arranged in an ordered or disordered manner on the housing substrate, and the plurality of convexes or concaves are arranged in a one-dimensional or two-dimensional direction on the first surface. The ordered arrangement may be a periodic arrangement, and when a plurality of convexes or concaves are arranged periodically, the distance between the boundaries of any two adjacent convexes or concaves on the same side is the period. Optionally, the period is in the range of 1-900 nm. Optionally, the period is in the range of 1-400 nm. Further, the period is in the range of 100-300 nm or 150-250 nm. Optionally, the period is in the range greater than 400 nm and less than or equal to 900 nm. Further, the period is in the range of 500-800 nm.

In this implementation of the present invention, the convex or concave is a three-dimensional pattern, and a specific shape of the convex or concave is not limited. For example, the convex or concave may be hemispherical, ellipsoidal, columnar, or a linear concave or convex. A specific cross-sectional shape of the columnar convex or concave is not particularly limited, and may be a geometric shape or a non-geometric shape, for example, a square shape, a diamond shape, a polygon shape, a pentagram shape, or a flower shape

In a specific implementation of the present invention, the first surface is provided with a convex, more particularly, a columnar convex array. In another specific implementation of the present invention, the convex or concave structure is a concave array, more particularly, a hole array.

In this implementation of the present invention, the plurality of convexes or concaves may be of the same structural shape and the same size, or may be of different structural shapes and different sizes. To simplify the production process, the plurality of convexes or concaves may be of the same shape and the same size and arranged in an array on the housing substrate.

In this implementation of the present invention, the anti-fingerprint terminal housing has excellent optical properties. The visible light transmittance of the anti-fingerprint terminal housing is greater than 80%, and the visible light transmittance of most samples is greater than 90%. Haze of the anti-fingerprint terminal housing is less than 5%; and further, haze of the anti-fingerprint terminal housing is less than 1%, and the haze of most samples is less than 0.1%. It can be seen that the arrangement of the convex or concave structure in this implementation of the present invention does not greatly reduce the visible light transmittance of the housing, and the haze of the product in this embodiment of the present invention is controlled to be within a small range while ensuring an excellent anti-fingerprint effect, thereby ensuring the application requirement of the product on a terminal product and improving user experience.

In this implementation of the present invention, based on a specific convex or concave structure design, the water contact angle of the first surface is greater than or equal to 110°, and further, the water contact angle is greater than or equal to 120°, where the maximum contact angle may be greater than or equal to 150°, so that the terminal housing has excellent hydrophobicity.

In this implementation of the present invention, the material of the housing substrate may be glass, plastic, metal, or other useful terminal housing material. The terminal housing may be a planar housing or a curved housing. The thickness of the housing substrate is not particularly limited in this embodiment of the present invention, and may depend on a specific product, for example, may be 0.5-0.7 mm.

In this implementation of the present invention, to further enhance the anti-fouling and anti-fingerprint effects of the terminal housing, the first surface is further provided with an anti-fingerprint coating, the anti-fingerprint coating completely covers the first surface and completely covers the surfaces of the plurality of convexes or concaves, and the material of the anti-fingerprint coating includes at least one of fluorosilane, alkylsiloxane, or tetrafluoropolyether. By combining the anti-fingerprint coating and the convex or concave structure, a better anti-fingerprint effect can be achieved. There is no conflict between the two processes, and because of the presence of the convex or concave structure on the surface of the housing substrate, the contact area between the anti-fingerprint coating and the housing substrate is increased, so that the anti-fingerprint coating is more tightly combined with the convex or concave structure.

In this implementation of the present invention, the terminal housing may be a housing, a display screen cover plate, a rear cover plate, or the like of various terminal products, for example, may be a front screen cover plate or a rear cover plate of a mobile phone.

According to the foregoing anti-fingerprint terminal housing provided in this embodiment of the present invention, the convex or concave structure of the anti-fingerprint terminal housing is formed on the surface of the housing substrate, and has a specific size design, so that the surface of the terminal housing has high mechanical strength and excellent wear resistance performance while featuring excellent anti-fouling performance and anti-fingerprint performance, low friction coefficient, high light transmittance, and low haze, thereby greatly improving user experience.

The foregoing anti-fingerprint terminal housing in this embodiment of the present invention can be prepared in the following manner:
Taking a housing substrate, where the housing substrate includes a first surface and a second surface that are oppositely disposed; etching the housing substrate using an etching process, so as to form a plurality of spaced convexes or concaves formed by the housing substrate on the first surface, where the distance between the boundaries of any two adjacent convexes or concaves on the same side is in the range of 1-900 nm, the height of the convex is in the range of 1-400 nm, and the depth of the concave is in the range of 1-400 nm.

In this implementation of the present invention, the foregoing preparation process may further include performing heat treatment and/or a chemical strengthening operation after the etching, so as to further improve the mechanical strength and wear resistance of the convex or concave structure. Specifically, the chemical strengthening operation may be specifically performed through impregnation using potassium nitrate solution with of 400°C-550°C for 1-3 hours. The temperature of the heat treatment may be 150°C-600°C.

In this implementation of the present invention, to obtain a better anti-fingerprint effect, the first surface may be further provided with an anti-fingerprint coating, the anti-fingerprint coating completely covers the first surface and completely covers the surfaces of the plurality of convexes or concaves, and the material of the anti-fingerprint coating includes at least one of fluorosilane, alkylsiloxane, or tetrafluoropolyether.

In this implementation of the present invention, the etching process may be any process that can be used to implement the preparation of a convex or concave structure, including one or any combination of dry etching, wet etching, or laser etching. Dry etching may be specifically inductively coupled plasma etch (Inductively Coupled Plasma Etch, ICPE) or reactive ion etching (Reactive Ion Etching, RIE). The masking method used in the etching process is not particularly limited in the present invention.

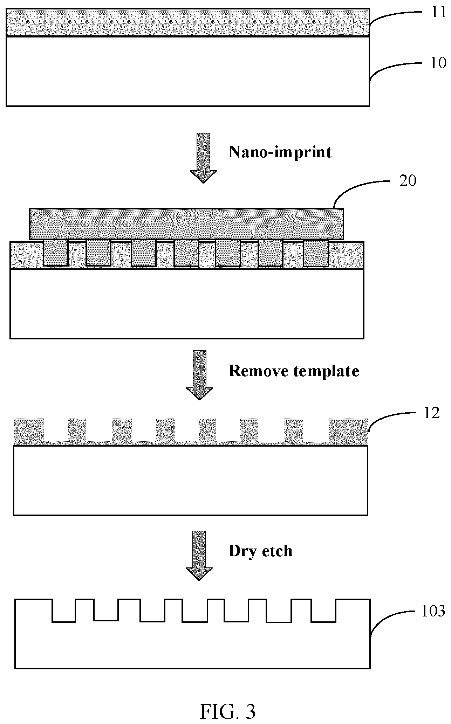

Specifically, as shown in FIG. 3, in an implementation of the present invention, the etching process may include the following steps:
S10. Coat a photoresist material on the first surface of the housing substrate 10 to form a photoresist film 11.
S12. Press a nano-imprint template 20 onto the photoresist film 11, and perform photocuring or thermal curing to obtain a photoresist film 12 having a concave structure.
S13. Based on a pattern defined by the photoresist film, perform inductively coupled plasma dry etching to etch the housing substrate below the concave structure, so as to form the concave structure; and then use the acetone ultrasound method to remove the residual photoresist film, so as to obtain an anti-fingerprint terminal housing 103.

The photoresist material may be a heat-curable or photo-curable resin commonly used in the existing etching process. The nano-imprint template may be a polydimethylsiloxane (PDMS) template.

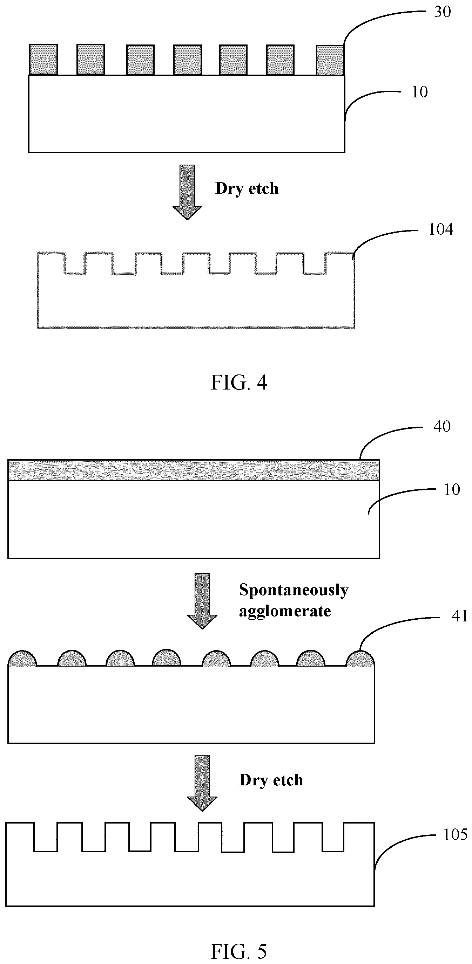

Specifically, as shown in FIG. 4, in another implementation of the present invention, the etching process may include the following steps:
S20. Prepare or transfer a porous alumina template 30 on the first surface of the housing substrate 10.
S21. Etch an exposed part of the first surface of the housing substrate by using the porous alumina template 30 as a mask and by using an inductively coupled plasma dry etching method, so as to form a concave structure corresponding to the alumina template; and then use the phosphoric acid ultrasound method to remove the residual alumina template, so as to obtain an anti-fingerprint terminal housing 104.

Specifically, as shown in FIG. 5, in another implementation of the present invention, the etching process may include the following steps:
S30. Coat or evaporate a metal film or polymer film 40 on the first surface of the housing substrate 10, where the metal film 40 may be copper, silver, or gold;
S31. Heat the metal film or polymer film 40 in an inert gas atmosphere, so that the metal film or polymer film 40 spontaneously agglomerates to form a nano-template 41;
S32. Etch an exposed part of the first surface of the housing substrate 10 by using the metal film nano-template 41 as a mask and by using a reactive ion dry etching method, so as to form a convex structure corresponding to the metal film nano-template; and then use the nitric acid ultrasound method to remove the residual metal film, so as to obtain an anti-fingerprint terminal housing 105. In this implementation, a structure in which convexes are arranged in a disordered manner can be obtained.

In the foregoing process, the height of the convex or the depth of the concave can be controlled by controlling the etching time.

In the foregoing preparation method provided in this embodiment of the present invention, the process is simple. Therefore, the method is suitable for commercial production.

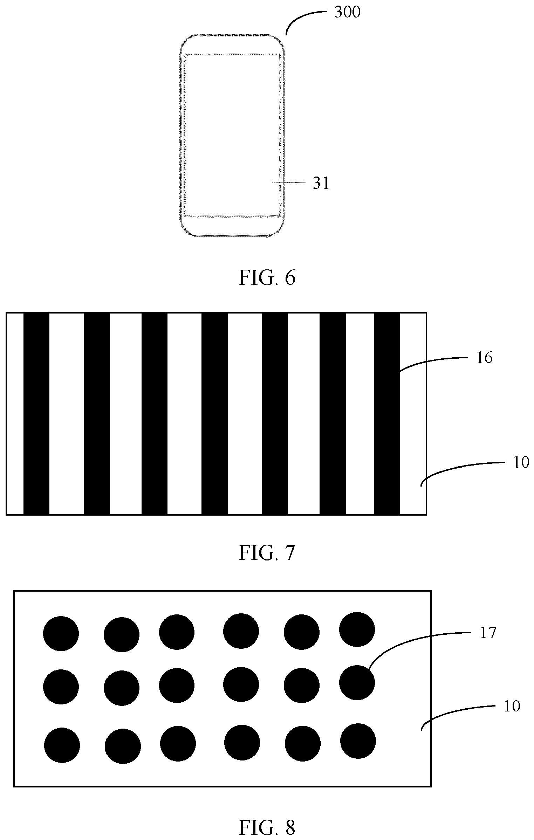

Further, as shown in FIG. 6, an embodiment of the present invention provides a terminal 300, where the terminal 300 includes a housing, and a display module and an electronic component module that are housed in the housing, the housing includes a front cover plate 31 and a rear cover plate (not shown in the figure), the display module is disposed inside the front cover plate 31, and the display module is electrically connected to the electronic component module. The front cover plate 31 and/or the rear cover plate are/is the anti-fingerprint terminal housing/housing according to the foregoing embodiment of the present invention.

The terminal in this embodiment of the present invention may be a mobile phone, a tablet computer, or the like.

A plurality of embodiments of the present invention are described below.

### Embodiment 1

A method for preparing an anti-fingerprint terminal housing includes the following steps:
(1) Take a glass housing substrate, and coat a photoresist material on one surface of the glass housing substrate to form a photoresist film.
(2) Take a PDMS nano-imprint template, where the nano-imprint template has a one-dimensional grating convex structure with a period of 300 nm and a line width of 150 nm; press the nano-imprint template on the photoresist film at a pressure of 500 kpa; and then perform ultraviolet curing, and after 10 minutes, and remove the template from the surface of the photoresist film, so as to obtain a photoresist film having a one-dimensional grating concave structure with a period of 300 nm and a line width of 150 nm.
(3) Etch one surface of the housing substrate for 5 minutes based on a pattern defined by a photoresist film, by using CF₄/O₂ as a reaction gas, and by using an inductively coupled plasma dry etching method, so as to form a one-dimensional grating concave with a period of 300 nm, a line width of 150 nm, and a depth of 60 nm; and then use the acetone ultrasound method to remove the residual photoresist film.
(4) Plate a tetrafluoropolyether hydrophobic coating on the housing surface where the concave structure is located by using a physical vapor deposition process, so as to obtain an anti-fingerprint terminal housing.

FIG. 7 is a schematic diagram of an arrangement of a concave structure according to Embodiment 1 of the present invention, where "10" indicates a glass housing substrate, and "16" indicates a one-dimensional grating concave structure.

### Embodiment 2

Embodiment 2 differs from Embodiment 1 in that the etching time is 10 minutes, and the surface of the housing is a one-dimensional grating concave structure with a period of 300 nm, a line width of 150 nm, and a depth of 120 nm.

### Embodiment 3

Embodiment 3 differs from Embodiment 1 in that the etching time is 30 minutes, and the surface of the housing is a one-dimensional grating concave structure with a period of 300 nm, a line width of 150 nm, and a depth of 360 nm.

### Embodiment 4

Embodiment 4 differs from Embodiment 1 in that a different PDMS nano-imprint template is used, the etching time is 10 minutes, and the surface of the housing is a two-dimensional periodic hole array structure with a period of 350 nm, a hole diameter of 200 nm, and a depth of 100 nm.

FIG. 8 is a schematic diagram of an arrangement of a hole array according to Embodiment 4 of the present invention, where "10" indicates a glass housing substrate, and "17" indicates a two-dimensional periodic hole array structure.

### Embodiment 5

Embodiment 5 differs from Embodiment 1 in that a different PDMS nano-imprint template is used, the etching time is 10 minutes, and the surface of the housing is a two-dimensional periodic hole array structure with a period of 350 nm, a hole diameter of 300 nm, and a depth of 100 nm.

### Embodiment 6

Embodiment 6 differs from Embodiment 1 in that a different PDMS nano-imprint template is used, the etching time is 10 minutes, and the surface of the housing is a two-dimensional periodic cylindrical convex array structure with a period of 350 nm, a diameter of 200 nm, and a height of 100 nm.

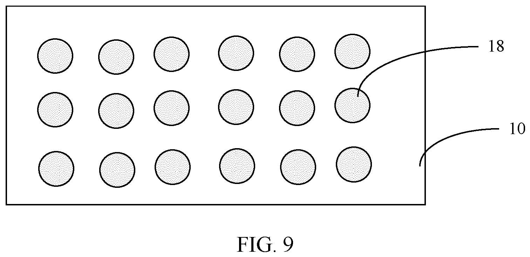

FIG. 9 is a schematic diagram of an arrangement of a convex structure according to Embodiment 6 of the present invention, where "10" indicates a glass housing substrate, and "18" indicates a two-dimensional periodic cylindrical convex array structure.

### Comparative Embodiment

Take a glass housing substrate, and coat a photoresist material on one surface of the glass housing substrate to form a photoresist film; and perform nano-imprinting to obtain a photoresist film having a two-dimensional periodic cylindrical convex array structure with a period of 350 nm, a diameter of 200 nm, and a height of 100 nm, so as to obtain a terminal housing in which the convex structure is formed by the photoresist film.

Table 1 shows the performance tests performed on the samples that are obtained in Embodiments 1 to 6 of the present invention and the comparative embodiment, and shows the test results.

**Table 1**

| Embodiment | Size of the convex or concave structure | Etching time/depth or height | Water contact angle | Fingerprint residual rate | Visible light transmittance/ha ze | Wear resistance performance (water contact angle after 2000 times of friction by using steel wool with 1 kgf) |
|---|---|---|---|---|---|---|
| 1 | One-dimension al grating concave structure with a period of 300 nm and a line width of 150 nm | 5 minutes/60 nm | 133° | 43% | 95.5%/0.05% | 103° |
| 2 | One-dimensional grating concave structure with a period of 300 nm and a line width of 150 nm | 10 minutes/120 nm | 136° | 42% | 94%/0.06% | 102° |
| 3 | One-dimension al grating concave structure with a period of 300 nm and a line width of 150 nm | 30 minutes/360 nm | 138° | 39% | 92%/0.1% | 105° |
| 4 | Two-dimension al periodic hole array with a period of 350 nm and a hole diameter of 200 nm | 10 minutes/100 nm | 121° | 56% | 94.7%/0.07% | 113° |
| 5 | Two-dimensional periodic hole array with a period of 350 nm and a hole diameter of 300 nm | 10 minutes/100 nm | 137° | 35% | 96.1%/0.05% | 118° |
| 6 | Two-dimension al periodic columnar convex array with a period of 350 nm and a diameter of 200 nm | 10 minutes/100 nm | 148° | 24% | 96.3%/0.06% | 124° |
| Comparative embodiment | Two-dimension al periodic columnar convex array with a period of 350 nm and a diameter of 200 nm | No etching is performed and the convex structure is formed by a photoresist film. | 145° | 27% | 86.2%/0.13% | 14° |

The fingerprint residue rate is obtained as follows: Evaluated adhesion rate A1 of the glass sample with a convex or concave structure according to each embodiment and evaluated adhesion rate A0 of the original glass substrate without a convex or concave structure are measured are obtained by using the method described in the Japanese patent application with the publication number JP2011099744A, and then A1 and A0 are compared (A1/A0), so as to obtain the fingerprint residual rate of each glass sample. In all subsequent embodiments, the fingerprint residue rate is obtained using the foregoing method.

The foregoing results show that because the convex or concave structure is formed by the housing substrate, the terminal housings prepared in Embodiments 1 to 6 of the present invention have higher mechanical strength and better wear resistance performance than the comparative embodiment in which a sample with micro-nano convexes is provided by an additional coating; in addition, because of the special size design of the convex or concave structure in this embodiment of the present invention, the housing features excellent anti-fouling performance and anti-fingerprint performance, high light transmittance, and low haze.

### Embodiment 7

A method for preparing an anti-fingerprint terminal housing includes the following steps:
(1) Prepare or transfer an ultra-thin through-hole porous alumina template with a thickness of 650 nm on one surface of the glass housing substrate, where the porous alumina template is of a two-dimensional periodic hole array structure with a period of 350 nm and a hole diameter of 100 nm.
(2) Etch an exposed part on one surface of the housing substrate for 10 minutes based on a porous alumina template mask, by using CF₄/O₂ as a reaction gas, and by using an inductively coupled plasma dry etching method, so as to form a two-dimensional periodic hole array structure with a period of 350 nm, a hole diameter of 100 nm, and a depth of 100 nm; and then use the phosphoric acid ultrasound method to remove the residual alumina template.
(3) Plate a tetrafluoropolyether hydrophobic coating on the housing surface where the hole array is located by using a physical vapor deposition process, so as to obtain an anti-fingerprint terminal housing.

### Embodiment 8

Embodiment 8 differs from Embodiment 7 in that the surface of the housing is a two-dimensional periodic hole array structure with a period of 350 nm, a hole diameter of 200 nm, and a depth of 100 nm.

### Embodiment 9

Embodiment 9 differs from Embodiment 7 in that the surface of the housing is a two-dimensional periodic hole array structure with a period of 350 nm, a hole diameter of 300 nm, and a depth of 100 nm.

### Embodiment 10

Embodiment 10 differs from Embodiment 7 in that the surface of the housing is a two-dimensional periodic hole array structure with a period of 150 nm, a hole diameter of 50 nm, and a depth of 100 nm.

### Embodiment 11

Embodiment 11 differs from Embodiment 7 in that the surface of the housing is a two-dimensional periodic hole array structure with a period of 150 nm, a hole diameter of 100 nm, and a depth of 100 nm.

Table 2 shows the performance tests performed on the samples that are obtained in Embodiments 7 to 11 of the present invention, and shows the test results.

**Table 2**

| Embodiment | Size of the convex or concave structure | Etching time/depth | Water contact angle | Fingerprint residual rate | Visible light transmittance /haze | Wear resistance performance (water contact angle after 2000 times of friction by using steel wool with 1 kgf) |
|---|---|---|---|---|---|---|
| 7 | Two-dimensional periodic hole array with a period of 350 nm and a hole diameter of 100 nm | 10 minutes/100 nm | 113° | 67% | 92.5%/0.07% | 97° |
| 8 | Two-dimensional periodic hole array with a period of 350 nm and a hole diameter of 200 nm | 10 minutes/100 nm | 120° | 53% | 93.2%/0.06% | 101° |
| 9 | Two-dimensional periodic hole array with a period of 350 nm and a hole diameter of 300 nm | 10 minutes/100 nm | 138° | 37% | 93.5%/0.05% | 121° |
| 10 | Two-dimensional periodic hole array with a period of 150 nm and a hole diameter of 50 nm | 10 minutes/100 nm | 114° | 63% | 95.2%/0.04% | 97° |
| 11 | Two-dimensional periodic hole array with a period of 150 nm and a hole diameter of 100 nm | 10 minutes/100 nm | 125° | 31% | 96.1%/0.04% | 103° |

The foregoing results show that because the convex or concave structure is formed by the housing substrate, the terminal housings prepared in Embodiments 7 to 11 of the present invention have higher mechanical strength and better wear resistance performance than the comparative embodiment in which a sample with micro-nano convexes is provided by an additional coating; in addition, because of the special size design of the convex or concave structure in this embodiment of the present invention, the housing features excellent anti-fouling performance and anti-fingerprint performance, high light transmittance, and low haze.

### Embodiment 12

A method for preparing an anti-fingerprint terminal housing includes the following steps:
(1) Take a glass housing substrate, and coat or evaporate a metal copper film on one surface of the housing substrate.
(2) Heat the metal copper film to 410°C in a nitrogen atmosphere, so that the metal copper film spontaneously agglomerates to form disordered metal copper agglomerates, so as to obtain a nano-template, where the average particle size of the metal copper agglomerates is 230 nm, and the area proportion of the convexes formed by the metal copper agglomerates on one surface of the housing substrate is 46%.
(3) Etch an exposed part on one surface of the housing substrate for 20 minutes based on a metal copper film nano-template mask, by using CF₄/O₂ as a reaction gas, and by using a reactive ion dry etching method, so that the part covered by the metal copper film forms a disordered convex structure; and then use the nitric acid ultrasound method to remove the residual metal copper film.
(4) Plate a tetrafluoropolyether hydrophobic coating on the housing surface where the convex structure is located by using a physical vapor deposition process, so as to obtain an anti-fingerprint terminal housing.

### Embodiment 13

Embodiment 13 differs from Embodiment 12 in that a metal silver film is provided on the housing substrate, the average particle size of the metal silver agglomerates of the nano-template is 190 nm, and the area proportion of the convexes formed by the metal silver agglomerates on one surface of the housing substrate is 31%.

### Embodiment 14

Embodiment 14 differs from Embodiment 12 in that a metal gold film is provided on the housing substrate, the average particle size of the metal gold agglomerates of the nano-template is 130 nm, and the area proportion of the convexes formed by the metal gold agglomerates on one surface of the housing substrate is 14%.

Table 3 shows the performance tests performed on the samples that are obtained in Embodiments 12 to 14 of the present invention, and shows the test results.

**Table 3**

| Embodiment | Metal type | Nano-template size | Water contact angle | Fingerprint residual rate | Visible light transmittance/haz e | Wear resistance performance (water contact angle after 2000 times of friction by using steel wool with 1 kgf) |
|---|---|---|---|---|---|---|
| 12 | Copper | The average particle size of the metal nano-agglomerates is 230 nm; and an area proportion of the convexes is 46%. | 134° | 36% | 94.5%/0.07% | 120° |
| 13 | Silver | The average particle size of the metal nano-agglomerat es is 190 nm; and an area proportion of the convexes is 31%. | 142° | 35% | 94.2%/0.06% | 123° |
| 14 | Gold | The average particle size of the metal nano-agglomerat es is 130 nm; and an area proportion of the convexes is 14%. | 151° | 33% | 94.5%/0.06% | 127° |

The foregoing results show that because the convex or concave structure is formed by the housing substrate, the terminal housings prepared in Embodiments 12 to 14 of the present invention have higher mechanical strength and better wear resistance performance than the comparative embodiment in which a sample with micro-nano convexes is provided by an additional coating; in addition, because of the special size design of the convex or concave structure in this embodiment of the present invention, the housing features excellent anti-fouling performance and anti-fingerprint performance, high light transmittance, and low haze.

### Embodiment 15

Embodiment 15 differs from Embodiment 6 only in that the glass housing substrate is immersed in the potassium nitrate solution of 400°C-550°C for 2 hours before the tetrafluoropolyether hydrophobic coating is plated, so that the convex structure is chemically strengthened.

### Embodiment 16

Embodiment 16 differs from Embodiment 11 only in that the glass housing substrate is immersed in the potassium nitrate solution of 400°C-550°C for 2 hours before the tetrafluoropolyether hydrophobic coating is plated, so that the hole array structure is chemically strengthened.

### Embodiment 17

Embodiment 17 differs from Embodiment 14 only in that the glass housing substrate is immersed in the potassium nitrate solution of 400°C-550°C for 2 hours before the tetrafluoropolyether hydrophobic coating is plated, so that the convex structure is chemically strengthened.

Table 4 shows the performance tests performed on the samples that are obtained in Embodiments 15 to 17 of the present invention, and shows the test results.

**Table 4**

| Embodiment | Water contact angle | Fingerprint residual rate | Visible light transmittance/haze | Wear resistance performance (water contact angle after 2000 times of friction by using steel wool with 1 kgf) |
|---|---|---|---|---|
| 15 | 150° | 24% | 96.3%/0.06% | 135° |
| 16 | 130° | 31% | 96.1%/0.04% | 113° |
| 17 | 153° | 33% | 94.5%/0.06% | 134° |

The foregoing results show that after chemical strengthening, the mechanical strength and wear resistance of the convex or concave structure are improved.

## Claims

1. An anti-fingerprint terminal housing comprising a housing substrate, wherein the housing substrate comprises a first surface and a second surface that are oppositely disposed, the first surface faces the exterior of the terminal, and the second surface faces the interior of the terminal; the first surface is provided with a plurality of spaced convexes or concaves formed by the housing substrate, a distance between the boundaries of any two adjacent convexes or concaves on the same side is in a range of 1-900 nm, a height of the convex is in a range of 1-400 nm, and a depth of the concave is in the range of 1-400 nm.

2. The anti-fingerprint terminal housing according to claim 1, wherein the distance between the boundaries of any two adjacent convexes or concaves on the same side is in the range of 1-400 nm.

3. The anti-fingerprint terminal housing according to claim 2, wherein the distance between the boundaries of any two adjacent convexes or concaves on the same side is in the range of 100-300 nm.

4. The anti-fingerprint terminal housing according to claim 1, wherein the distance between the boundaries of any two adjacent convexes or concaves on the same side is in the range greater than 400 nm and less than or equal to 900 nm.

5. The anti-fingerprint terminal housing according to claim 1, wherein the height of the convex is in the range of 50-200 nm, and the depth of the concave is in the range of 50-200 nm.

6. The anti-fingerprint terminal housing according to claim 1, wherein the area proportion of the plurality of convexes or the area proportion of areas other than the plurality of the concaves on the first surface is less than or equal to 2/3.

7. The anti-fingerprint terminal housing according to claim 6, wherein the area proportion of the plurality of convexes or the area proportion of areas other than the plurality of the concaves on the first surface is less than or equal to 1/2.

8. The anti-fingerprint terminal housing according to claim 7, wherein the area proportion of the plurality of convexes or the area proportion of the areas other than the plurality of concaves on the first surface is greater than or equal to 1/10 and less than or equal to 1/2.

9. The anti-fingerprint terminal housing according to claim 1, wherein the first surface is further provided with an anti-fingerprint coating, the anti-fingerprint coating completely covers the first surface and completely covers the surfaces of the plurality of convexes or concaves, the material of the anti-fingerprint coating comprises at least one of fluorosilane, alkylsiloxane, or tetrafluoropolyether.

10. A terminal, wherein the terminal comprises a housing, and a display module and an electronic component module that are housed in the housing, the display module is electrically connected to the electronic component module, and the housing comprises the anti-fingerprint terminal housing according to any one of claims 1 to 9.
